Europäisches Patentamt

European Patent Office

Office européen des brevets

(19)

(11) Veröffentlichungsnummer: **0 010 153**
**A1**

(12) **EUROPÄISCHE PATENTANMELDUNG**

(21) Anmeldenummer: **79103374.9**

(22) Anmeldetag: **10.09.79**

(51) Int. Cl.³: **A 23 K 1/12**
**A 23 K 1/14**

(30) Priorität: **18.10.78 DE 2845378**

(43) Veröffentlichungstag der Anmeldung:
**30.04.80 Patentblatt 80/9**

(84) Benannte Vertragsstaaten:
**NL SE**

(71) Anmelder: **Neumaier, Rolf**
**Am Flutgraben 5**
**D-8904 Friedberg(DE)**

(84) Benannte Vertragsstaaten:
**NL SE**

(71) Anmelder: **B.O.T. Chemische Produkte GmbH**
**Heinrich-Hertz-Strasse 120**
**D-2000 Hamburg 76(DE)**

(84) Benannte Vertragsstaaten:
**NL**

(72) Erfinder: **Neumaier, Rolf**
**Am Flutgraben 5**
**D-8904 Friedberg(DE)**

(74) Vertreter: **Munk, Ludwig, Dipl.-Ing.**
**Maximilianstrasse 71**
**D-8900 Augsburg(DE)**

(54) **Verfahren zum Aufschliessen von Stroh.**

(57) Durch Anfeuchtung pflanzlicher Produkte, wie Stroh, Grünmais, Rübenblatt oder dergleichen mit einer etwa 3 bis 5 %igen Hefelösung und anschließende Lagerung, vorzugsweise solange, bis Alkoholgeruch deutlich wahrnehmbar ist, werden ein hoher Nährstoffgehalt freigesetzt und eine gute Haltbarkeit erreicht, ohne daß Chemikalien zum Einsatz kommen.

EP 0 010 153 A1

## Verfahren zum Aufschließen von Stroh

Die Erfindung betrifft ein Verfahren zur Steigerung des Nährwerts von pflanzlichen Produkten, insbesondere pflanzlichen Abfällen wie Stroh und dergleichen, wobei das Ausgangsprodukt mit einer Lösung eines Fermentations- bzw. Aufschließungsmittels angefeuchtet und anschließend bis zur Futterreife gelagert wird.

Bisher wird versucht, z.B. Stroh durch Behandlung mit Natronlauge aufzuschließen, d.h. den Ligninpanzer zu sprengen, in welchem die im Stroh vorhandene, viele Nährstoffe enthaltende Zellulose eingeschlossen ist. Ursprünglich fand hierzu eine relativ starke Lauge Verwendung. Hierbei ergab sich jedoch der Nachteil, daß diese Lauge nach Erreichen der Futterreife mit viel Wasser wieder ausgewaschen werden mußte, wobei praktisch sämtliche wasserlöslichen Nährstoffe ebenfalls weggeschwemmt wurden. Man hat sich daher auch schon damit beholfen, eine relativ schwache Laugenkonzentration zu verwenden, wobei auf ein nachträgliches Auswaschen einfach verzichtet wird. Hierbei müssen jedoch Laugenrückstände im aufgeschlossenen Stroh in Kauf genommen werden, was vielfach unerwünscht ist und beispielsweise eine Verwendung als Tierfutter in vielen Fällen bereits auf Grund gesetzlicher Vorschriften unmöglich macht.

Bei einem anderen bekannten Verfahren wird das aufzuschließende Stroh mit Ammoniak behandelt. Dieses Verfahren läuft jedoch nicht nur höchst langsam ab, sondern erfordert zudem noch einen hohen gerätetechnischen Einsatz. Auch hier sind Rückstände praktisch nicht zu vermeiden.

Hiervon ausgehend ist es daher die Aufgabe der vorliegenden Erfindung unter Vermeidung der Nachteile der bekannten Lösungen ein Verfahren eingangs erwähnter Art zu schaffen, das nicht nur einen einfachen Verfahrensablauf aufweist, sondern gleichzeitig auch einen hohen Nährstoffgehalt freisetzt und zu einer praktisch unbegrenzten Haltbarkeit führt und bei dem außerdem keine Chemikalien zum Einsatz kommen, die nach Abschluß der Aufschließung wieder beseitigt werden müssen.

Die Lösung dieser Aufgabe gelingt in überraschend einfacher Weise dadurch, daß das Ausgangsprodukt, wie geschnittenes und gehäckseltes Stroh, Grünmais, Rübenblatt oder dergleichen, mit einer mindestens etwa 3 bis 5 %igen Hefelösung angefeuchtet wird. Hierbei werden ersichtlich natürliche Gär- bzw. Fermentationsstoffe verwendet, die nicht nur ernährungskundlich praktisch unbedenklich sind und daher nicht ausgewaschen werden müssen, sondern vielmehr den ernährungstechnischen Wert des so behandelten Futters noch verbessern. Das erfindungsgemäße Verfahren ist daher in vorteilhafter Weise schnell und einfach durchzuführen und führt zu einem hochwertigen Endprodukt. Schon nach verhältnismäßig kurzer Lagerzeit kann dabei ein Anstieg des Gehalts an verdaulichem Rohprotein um mehr als 700 % beobachtet werden. Die mit der Erfindung erzielbaren Vorteile sind daher nicht nur in der ernährungskundlichen Unbedenklichkeit sondern auch in einer ausgezeichneten Wirtschaftlichkeit zu sehen.

Die Gärung bzw. Fermentation führt zur Entstehung von Alkohol, der in vorteilhafter Weise einen ausreichenden Schutz vor Fremdbakterien ergibt, andererseits können sich in einer derartigen Atmosphäre erwünschte Substanzen vermehren, die eine weitere Erhöhung der Verdaulichkeit des aufgeschlossenen Produkts bewirken und eine weitere Erhöhung des Proteingehalts erwarten lassen. Der vorhandene Alkohol kann vielfach auch zu Esterbildung führen, was in vorteilhafter Weise einen angenehmen Fruchtgeschmack hervorruft, so daß erfindungsgemäß aufgeschlossene pflanzliche Produkte von Tieren aller Art als Futter gerne angenommen werden. Im Hinblick auf die erwünschte Alkoholbildung hat es sich als zweckmäßig erwiesen, wenn das aufzuschließende Produkt nach der Anfeuchtung mindestens solange gelagert wird, bis Alkoholgeruch deutlich wahrnehmbar ist. Erfahrungsgemäß lassen sich besonders gute Ergebnisse erzielen, wenn der Alkoholanteil mindestens etwa 0,6 % bezogen auf die Trockenmasse beträgt. Unter normalen Lagerverhältnissen, d.h. etwa bei Zimmertemperatur und ohne Kompression, ist dieser Zustand nach etwa 72 Stunden erreicht.

Infolge der in der Hefe vorhandenen verschiedenartigen Enzyme ist das erfindungsgemäße Verfahren sowohl unter Zutritt von Luft als auch in einem verschlossenen Behälter, d.h. mehr oder weniger unter Luftabschluß, durchführbar. Die Durchführung im geschlossenen, luftdicht verschließbaren Behälter verhindert ein Austrocknen der Hefe und damit jede Art von Fremdgärung und innerer Verbrennung. Man kommt dabei in besonders vorteilhafter Weise zu einer praktisch unbegrenzten Lagerfähigkeit des mit Hefe angefeuchteten Produkts, gleichgültig ob es sich dabei um sogenanntes Trockenfutter wie Stroh, oder Naßfutter wie Grünmais, Rübenblatt oder dergleichen handelt, was sich insbesondere bei der Verarbeitung von Naßfutter, wie gehäckseltem Grünmais, Rübenblatt oder dergleichen vorteilhaft auswirkt, da somit nicht jeden Tag Frischfutter eingeholt werden muß. Gleichzeitig bleiben dabei flüchtige Stoffe, beispielsweise flüchtige Aminosäuren, weitestgehend erhalten.

Gemäß einer anderen Weiterbildung des erfindungsgemäßen Verfahrens kann das feuchte Produkt dadurch haltbar gemacht werden, daß dieses nach Erreichen der Futterreife getrocknet wird. Dies erweist sich vor allem da als zweckmäßig, wo mit Luftzutritt gearbeitet wird. In vorteilhafter Weiterbildung wird dabei mit der Trocknung begonnen, sobald die Vermehrung der Hefezellen abklingt. Da aktive Hefezellen einen wirksamen Schutz gegen Fremdinfektion bieten, ist hierdurch sichergestellt, daß keine Fremdinfektion stattfindet.

Eine weitere zweckmäßige Fortbildung des übergeordneten Gedankens kann darin bestehen, daß das angefeuchtete Produkt nach der Anfeuchtung komprimiert wird. Die hierbei sich ergebende Temperaturerhöhung kann sich vorteilhaft auf die Hefetätigkeit auswirken, was eine Verkürzung des Verfahrensablaufs erwarten läßt. Es ist lediglich darauf zu achten, daß die Temperatur nicht so weit erhöht wird, daß die dem Produkt zugesetzte Hefe abgetötét wird. Anderrerseits kann sich jedoch ein thermischer Aufschluß der Hefezellen im Hinblick auf die für Nutztiere besser verfügbaren Proteine und Vitamine höchst vorteilhaft auswirken. Es kann sich daher vielfach als zweckmäßig erweisen, das aufgeschlossene bzw. fermentierte Produkt nach Erreichen der Futterreife entsprechend stark zu komprimieren und beispielsweise in kleine pellets zu pressen.

Das verwendete Lösungsmittel kann Wasser sein. Durch Zusatz von Milch bzw. Verwendung von Molke läßt sich der Verfahrensablauf in vorteilhafter Weise beschleunigen, wobei zudem infolge starker Vermehrung von Milchsäurebakterien eine ausgezeichnete Verdaulichkeit des Endprodukts erreicht wird.

Eine ganz besonders zweckmäßige Fortbildung des übergeordneten Gedankens kann darin bestehen, daß dem Lösungsmittel zusätzlich zur Hefe eine Hefenahrung zugesetzt wird. Diese kann etwa aus Stärke, vorzugsweise etwa in Form von Melasse, bestehen. Diese Maßnahmen bewirken eine sehr starke Hefeaktivierung und ergeben daher eine sehr starke Beschleunigung des Verfahrensablaufs, wobei gleichzeitig ein besonders hochwertiges Futter erreicht wird. Die mit Vorteil zum Einsatz kommende Melasse ist ein billiges Abfallprodukt, das in vorteilhafter Weise zu relativ günstigen Einstandspreisen zu beschaffen ist.

Weitere Merkmale und Vorteile der Erfindung ergeben sich aus der nachstehenden Beispielsbeschreibung.

Beispiel I:

Gehäckseltes Weizenstroh wurde mit einer 5 %igen Lösung einer obergärigen Hefe in Molke angefeuchtet. Dies läßt sich etwa mit einer in den Häcksler eingebauten Sprühdüse oder einfach mit Hilfe einer Gießkanne bewerkstelligen. Die hohe Aktivität obergäriger Hefe ist an sich bekannt. Das so angefeuchtete Stroh wurde bei normaler Zimmertemperatur und Atmosphärendruck in einem verschlossenen Plastiksack gelagert. Nach 36 Stunden wurde eine erste Probe entnommen. Der dabei festgestellte Gehalt an verdaulichem Rohprotein lag mehr als 600 % über dem Ausgangszustand. Nach 72 Stunden wurde eine zweite Probe entnommen. Der dabei festgestellte Gehalt an verdaulichem Rohprotein lag über 700 % über dem Ausgangszustand. Bei Entnahme der ersten Probe war Alkoholgeruch bereits deutlich wahrnehmbar. Bei Entnahme der zweiten Probe wurde ein angenehmer Fruchtgeruch festgestellt.

Beispiel II:

4 kg obergäriger Hefe und 1 kg Molkepulver wurden in 100 l Wasser angerührt. Dieser Lösung wurde ebensoviel Melasse zugesetzt. Ein derartiges Verhältnis hat sich als besonders zweckmäßig erwiesen. Das hiermit angefeuchtete Stroh wurde in verschlossenen Plastiksäcken bei Zimmertemperatur und Atmosphärendruck gelagert. Eine nach 24 Stunden entnommene Probe zeigte bereits einen Gehalt an verdaulichem Rohprotein von 7,5 % bezogen auf die Trockenmasse, das ist etwa 750 % mehr als der Ausgangswert. Eine bereits nach 12 Stunden entnommene Probe erreichte bereits 90 % der vorstehend angegebenen Werte. Besonders auffallend war hierbei die hohe Zunahme an essentiellen Amino-Säuren (Lysin und Methionin).

Beispiel III:

5 kg einer obergärigen Hefe wurden in 1oo l Magermilch (Molke) angerührt. Es wäre aber auch ohne weiteres denkbar, die Hefe in Wasser anzurühren, wobei anschließend Molkepulver dazugegeben werden kann. Dieser Lösung wurde ebenso viel, d. h. 5 kg Melasse zugesetzt. Ein derartiges Verhältnis hat sich als besonders zweckmäßig erwiesen. Mit dieser Lösung wurde nun in einen luftdicht verschließbaren Behälter eingehäckselter Grünmais benetzt. Mit 100 l der vorstehend beschriebenen Lösung wurden erwa 200 kg Grünmais benetzt. Die Benetzung erfolgte einfach durch Vermischung. Danach wurde der Behälter luftdicht verschlossen und abgestellt. Die Umgebungstemperatur betrug etwa 18 Grad Celsius. Im vorliegenden Fall wurde die Lösung in den bereits mit Grünmais gefüllten Behälter eingegeben. Es wäre aber auch ohne weiteres denkbar, die Lösung bereits vor Befüllung des Behälters in diesen einzubringen oder vorzugsweise gleichzeitig mit dem einzufüllenden Grünmais.

Nach zwei Stunden wurde der Behälter kurzzeitig geöffnet. Es war bereits leichter Alkoholgeruch wahrnehmbar. Nach 24 Stunden wurde dem Behälter eine Probe entnommen. Diese zeigte bereits deutlichen Fruchtestergeruch. Nach 74 Stunden wurde dem Behälter eine weitere Probe entnommen. Eine Untersuchung dieser Probe hat eine Steigerung des Gehalts an verdaulichem Rohprotein gegenüber unbehandeltem Grünmais um gut 80 % ergeben. Danach konnte keine weitere nennenswerte Steigerung mehr beobachtet werden. Die nach 24 Stunden entnommene Probe zeigte bereits 80 % des vorstehend genannten Endwerts.

Beispiel IV:

Weizenstroh wurde mit einer 5 %igen Wasser-Hefelösung so angefeuchtet, daß 1 kg Stroh 5,2 g Hefe (Trockensubstanz) zugesetzt wurde. Die verwendete Bäckerhefe enthielt in 1000 g (Trockensubstanz) 456 g Protein, davon 402 g Aminosäuren. Die nachstehende Aufstellung zeigt anschaulich den durch die Erfindung bewerkstelligten Anstieg des Gehalts an Aminosäuren und damit an Protein. Links stehen die Aminosäuregehalte von nicht behandeltem Stroh bezogen auf 1 kg, rechts stehen die Aminosäuregehalte, die nach einer Lagerung von ca. 24 Stunden in einem luftdicht verschlossenen Plastiksack bei Zimmertemperatur und Normaldruck ermittelt wurden, ebenfalls bezogen auf 1 kg. In der Mitte stehen die dem Stroh in der Form von Hefe und zugesetzten Aminosäuremengen, bezogen auf die 1 kg Stroh zugesetzte Menge. Das Ergebnis ergibt eine Steigerung um mehr als 100 %.

| Aminosäurengehalt 1000 g Stroh unbehandelt | | Aminosäurengehalt der zugesetzten Hefe 1000 g Stroh | Aminosäurengehalt n.d.Fermentierung in 1000 g Stroh |
|---|---|---|---|
| Lysin : | 0,8 g | 0,14 g | 3,4 g |
| Histidin : | 0,2 g | 0,04 g | 1,2 g |
| Arginin : | 0,6 g | 0,12 g | 1,7 g |
| Aspargin S. : | 3,1 g | 0,17 g | 5,7 g |
| Cystein : | ——— | 0,003g | 1,4 g |
| Methionin : | 0,1 g | 0,03 g | 1,3 g |
| Threonin : | 1,3 g | 0,13 g | 2,9 g |
| Serin : | 1,5 g | 0,12 g | 3,7 g |
| Glutamin S. : | 3,8 g | 0,36 g | 9,8 g |
| Glycin : | 1,7 g | 0,10 g | 3,6 g |
| Alanin : | 2,1 g | 0,11 g | 4,6 g |
| Valin : | 2,0 g | 0,11 g | 3,2 g |
| Isoleucin : | 1,1 g | 0,12 g | 2,2 g |
| Leucin : | 2,0 g | 0,16 g | 4,8 g |
| Tyrosin : | 0,7 g | 0,10 g | 1,5 g |
| Phenilalanin : | 1,2 g | 0,13 g | 2,6 g |
| gesammt : | 22,29 g | 1,94 g | 53,6 g |

Vitamin A unterhalb der Nachweisgrenze - Vitamin E  35 mg/kg

0010153

Anstelle gehächselten Materials hätte selbstverständlich auch Material in natürlicher Länge oder lediglich grob zerkleinertes Material Verwendung finden können. Das erhaltene Verfahrensprodukt kann beispielsweise direkt verfüttert oder aber weiterverarbeitet werden, beispielsweise als Grundlage für bzw. als Beimischung zu Fertigfutter, etwa in Form von gepreßten pellets, cops, Brickets etc.. Das erfindungsgemäße Verfahrensprodukt kann aber auch zur Gewinnung von Reineiweiß Verwendung finden.

Es wird angenommen, daß die Steigerung des Proteingehalts auf eine doppelte Wirkung der verwendeten Hefe zurückzuführen ist. Zum einen wird durch die Hefe die Aufschließung der Rohfaser bewerkstelligt, wodurch die hierin vorhandenen Nährstoffe verfügbar gemacht werden. Auf der Grundlage dieser Nährstoffe kann nun die Hefe arbeiten, wobei die im Grünfutter etc. vorhandene Stärke in Alkohol und Kohlensäure umgesetzt und eine starke Population eiweißbildender Bakterien beginnt. Nach einer gewissen Passivierung der Hefe produzieren Enzyme von Mikroorganismen Aminosäuren. Gleichzeitig erfolgt dabei eine Umwandlung von einfachen Wasserstoffvorstufen und Fettabbauprodukten in Protein. Alles zusammen dürfte für die ermittelten hohen Nährwerte verantwortlich sein.

Patentansprüche

1) Verfahren zur Steigerung des Nährwerts von pflanzlichen Produkten, insbesondere pflanzlichen Abfällen, wie Stroh und dergleichen, wobei das Ausgangsprodukt mit einer Lösung eines Fermentations- bzw. Aufschließungsmittels angefeuchtet und anschließend bis zur Futterreife gelagert wird, dadurch gekennzeichnet, daß das Ausgangsprodukt mit einer mindestens etwa 3 bis 5 %igen Hefelösung angefeuchtet wird.

2) Verfahren nach Anspruch 1, dadurch gekennzeichnet, daß die an die Befeuchtung mit Hefelösung sich anschließende Lagerung in einem geschlossenen, vorzugsweise luftdicht verschließbaren Behälter vorgenommen wird.

3) Verfahren nach Anspruch 1 oder 2, dadurch gekennzeichnet, daß die Lagerzeit nach der Anfeuchtung mindestens solange dauert, bis Alkoholgeruch deutlich wahrnehmbar ist.

4) Verfahren nach Anspruch 3, dadurch gekennzeichnet, daß die Lagerzeit nach der Anfeuchtung mindestens solange dauert, bis ein Alkoholanteil von mindestens 0,6 % bezogen auf die Trockenmasse erreicht ist.

5) Verfahren nach wenigstens einem der vorhergehenden Ansprüche 1 bis 4, dadurch gekennzeichnet, daß das in feuchtem Zustand gelagerte Produkt nach Erreichen der Futterreife getrocknet wird.

6) Verfahren nach wenigstens einem der vorhergehenden Ansprüche 1 bis 5, dadurch gekennzeichnet, daß mit der Trocknung begonnen wird, sobald die Vermehrung der Hefezellen abklingt.

7) Verfahren nach Anspruch 2, dadurch gekennzeichnet, daß der Behälter nach Entnahme mehrerer Chargen nachgefüllt und der dabei noch vorhandene Restinhalt mit dem Neuinhalt vermischt wird.

8) Verfahren nach wenigstens einem der vorhergehenden Ansprüche 1 bis 7, dadurch gekennzeichnet, daß das angefeuchtete Produkt mindestens einmal komprimiert wird, wobei eine gegebenenfalls vor Erreichen der Futterreife durchzuführende Kompression in einen unterhalb der für die zugesetzten Hefen kritischen Temperatur liegenden Temperaturbereich und eine gegebenenfalls nach Erreichen der Futterreife durchzuführende Kompression in einen oberhalb der für die zugesetzten Hefen kritischen Temperatur liegenden Temperaturbereich führt.

9) Verfahren nach wenigstens einem der vorhergehenden Ansprüche, dadurch gekennzeichnet, daß das Lösungsmittel im wesentlichen Wasser enthält.

10) Verfahren nach wenigstens einem der vorhergehenden

Ansprüche, <u>dadurch gekennzeichnet, daß</u> das Lö-
·sungsmittel Milch enthält, vorzugsweise aus Molke
besteht.

11) Verfahren nach wenigstens einem der vorhergehenden Ansprüche, <u>dadurch gekennzeichnet, daß</u> dem
Lösungsmittel zusätzlich zur Hefe eine Hefenahrung zugesetzt wird.

12) Verfahren nach Anspruch 11, <u>dadurch gekennzeichnet,</u>
<u>daß</u> dem Lösungsmittel Stärke, vorzugsweise in Form
von Melasse, zugesetzt wird.

13) Verfahren nach wenigstens einem der vorhergehenden Ansprüche, <u>dadurch gekennzeichnet, daß</u> eine
Gärhefe, vorzugsweise eine obergärige Hefe vom Stamm
Sacharomyces Cerevisiae Verwendung findet.

# EUROPÄISCHER RECHERCHENBERICHT

**Europäisches Patentamt**

| | EINSCHLÄGIGE DOKUMENTE | | | KLASSIFIKATION DER ANMELDUNG (Int.Cl.³) |
|---|---|---|---|---|
| **Kategorie** | **Kennzeichnung des Dokuments mit Angabe, soweit erforderlich, der maßgeblichen Teile** | **betrifft Anspruch** | | |
| X,P | DE – A1 – 2 717 193 (R. NEUMAIER) <br> * Ansprüche 1 und 2 * <br> -- | 1,9, 10 | | A 23 K 1/12 <br> A 23 K 1/14 |
| X,P | DE – A1 – 2 759 347 (R. NEUMAIER) <br> * Ansprüche 1 bis 3 * <br> -- | 1,12 | | |
| X | DE – A1 – 2 809 531 (PROCESS ENGINEER- ING CO.) <br> * Ansprüche 1 und 3 * <br> & FR – A1 – 2 382 864 <br> -- | 1,12 | | |
| X | DD – A – 131 898 (R. SCHANZE) <br> * Ansprüche 1 und 2 * <br> -- | 1,10, 12 | | RECHERCHIERTE SACHGEBIETE (Int. Cl.³) <br><br> A 23 K 1/00 |
| A | DE – A1 – 2 543 939 (K. GRABBE et al.) <br> * ganzes Dokument * <br> ---- | | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

[X] Der vorliegende Recherchenbericht wurde für alle Patentansprüche erstellt.

| Recherchenort | Abschlußdatum der Recherche | Prüfer |
|---|---|---|
| Berlin | 06-12-1979 | SCHULTZE |

EPA form 1503.1 06.78